# EUROPEAN PATENT APPLICATION

(11) **EP 4 561 198 A1**
(43) Date of publication of application: **28.05.2025**
(21) Application number: 23868444.3
(22) Date of filing: 05.09.2023
(51) Int. Cl.: H04W 52/36, H04W 52/22, H04W 52/38, H04W 52/02

(54) **METHOD AND DEVICE FOR POWER ADJUSTMENT**

(30) Priority: 19.09.2022 KR 20220117758; 12.10.2022 KR 20220130301
(71) Applicant: Samsung Electronics Co., Ltd., Suwon-si, Gyeonggi-do 16677 (KR)
(72) Inventor: KANG, Youngjin, Suwon-si, Gyeonggi-do 16677 (KR); GHIM, Jaegon, Suwon-si, Gyeonggi-do 16677 (KR); SON, Byoungil, Suwon-si, Gyeonggi-do 16677 (KR); AN, Sungchan, Suwon-si, Gyeonggi-do 16677 (KR); LEE, Dongjun, Suwon-si, Gyeonggi-do 16677 (KR); CHAE, Kyumin, Suwon-si, Gyeonggi-do 16677 (KR); HEO, Wonhyung, Suwon-si, Gyeonggi-do 16677 (KR)
(74) Representative: Gulde & Partner
(86) International application number: PCT/KR2023/013243
(87) International publication number: WO 2024/063389

(57) **Abstract**

An electronic device of the present disclosure may transmit a signal according to a Tx duty set on the basis of a time division duplex (TDD) band, calculate, on the basis of a maximum transmission power value in which a time average SAR is reflected, a maximum power value output when the signal is transmitted, check the occurrence of an event in the electronic device, set a maximum instantaneous power value corresponding to the event, compare the calculated maximum transmission power value with the set maximum instantaneous power value, and use a less power value of the calculated maximum transmission power value and the set maximum instantaneous power value as the maximum power value capable of outputting at the Tx duty.

## Description

### [Technical Field]

The disclosure relates to a method for performing power adjustment based on a specific absorption rate (SAR) and a device using the method.

### [Background Art]

A user equipment (UE) may transmit electromagnetic waves to transmit/receive data to/from a base station. Electromagnetic waves radiated from the UE may harm the human body, and various domestic or foreign organizations attempt to restrict the harmful electromagnetic waves. For example, the specific absorption rate (SAR) is a value indicating how much electromagnetic radiation from a mobile communication terminal is absorbed by the human body. SAR uses the unit of KW/g (or mW/g), which may mean the amount of power (KW, W or mW) absorbed per 1g of the human body. As the issue of harmfulness of electromagnetic waves attracts attention, SAR limit standards for mobile communication terminals have been established.

The UE may back off the transmission power (or maximum transmission power limit (MTPL)), e.g., if the SAR expected by the transmission power is expected to exceed a threshold. For example, upon identifying that a specific event (e.g., a grip, hot-spot, or proximity) occurs, the UE may transmit a communication signal in the backoff power corresponding to the event or transmit a communication signal in the transmission power set based on the maximum transmission power limit.

Further, there is also used technology of backing off the transmission power (or maximum transmission power limit) based on the total SAR value accumulated for a predetermined time (or the average of the SARs generated for a predetermined time). The SAR that instantaneously affects the human body and/or the SAR that affects the human body on average should also be considered. Therefore, the transmission power (or maximum transmission power limit) when the total SAR value accumulated (or the average of the SARs generated for a predetermined time) meets a designated condition may be backed off.

For uplink and downlink transmissions, a time division duplex (TDD) scheme in which the transmissions are performed using different times may be used.

### [Detailed Description of the Invention]

### [Technical Solution]

An electronic device 101 according to an embodiment of the disclosure may comprise a transceiver and at least one processor. The at least one processor according to an embodiment of the disclosure may be configured to transmit a signal according to a Tx duty which is set based on a time division duplex (TDD) band.

The at least one processor according to an embodiment of the disclosure may be configured to calculate a maximum power value which is output when transmitting the signal based on a maximum transmission power value considering a time average SAR.

The at least one processor according to an embodiment of the disclosure may be configured to identify an occurrence of an event in the electronic device.

The at least one processor according to an embodiment of the disclosure may be configured to set a maximum instantaneous power value corresponding to the event.

The at least one processor according to an embodiment of the disclosure may be configured to compare the calculated maximum transmission power value and the set maximum instantaneous power value to use a less power value as a maximum power value capable of outputting at the Tx duty.

A method by an electronic device 101 according to an embodiment of the disclosure may comprise transmitting a signal according to a Tx duty which is set based on a time division duplex (TDD) band.

The method by the electronic device 101 according to an embodiment of the disclosure may comprise calculating a maximum power value which is output when transmitting the signal based on a maximum transmission power value considering a time average SAR.

The method by the electronic device 101 according to an embodiment of the disclosure may comprise identifying an occurrence of an event in the electronic device.

The method by the electronic device 101 according to an embodiment of the disclosure may comprise setting a maximum instantaneous power value corresponding to the event.

The method by the electronic device 101 according to an embodiment of the disclosure may comprise comparing the calculated maximum transmission power value and the set maximum instantaneous power value.

In the method by the electronic device 101 according to an embodiment of the disclosure, a less power value of the calculated maximum transmission power value and the set maximum instantaneous power value may be used as a maximum power value capable of outputting at the Tx duty.

### [Brief Description of the Drawings]

FIG. 1 is a view illustrating an electronic device in a network environment according to various embodiments;
FIG. 2A is a block diagram illustrating an electronic device for supporting legacy network communication and 5G network communication according to various embodiments;
FIG. 2B is a block diagram illustrating an electronic device for supporting legacy network communication and 5G network communication according to various embodiments;
FIG. 3A is a flowchart illustrating an operation method of an electronic device according to various embodiments;
FIG. 3B is a view illustrating transmission power and SAR over time according to various embodiments;
FIG. 4A illustrates a graph of transmission power per time according to various embodiments;
FIG. 4B illustrates a graph of transmission power per time according to various embodiments;
FIG. 4C illustrates a graph of transmission power per time according to various embodiments;
FIG. 4D illustrates tables of transmission power per time according to various embodiments;
FIG. 4E illustrates tables of transmission power per time according to various embodiments;
FIG. 5 illustrates comparing peak mode operations in an operation of an electronic device according to an embodiment of the disclosure;
FIG. 6 illustrates operations of an electronic device according to an embodiment of the disclosure; and
FIG. 7 illustrates operations of an electronic device according to an embodiment of the disclosure.

### [Mode for Carrying out the Invention]

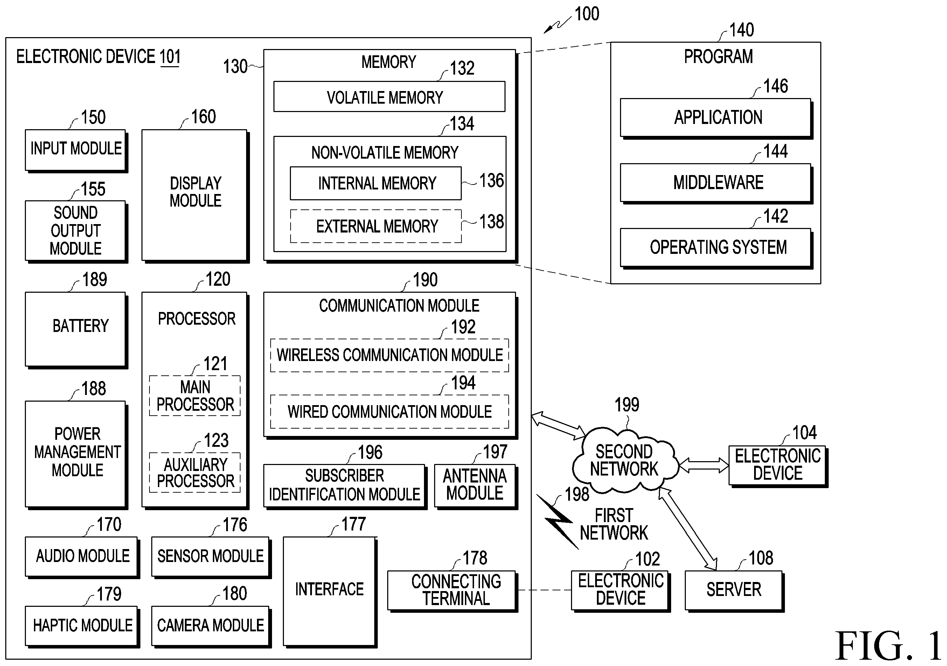

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

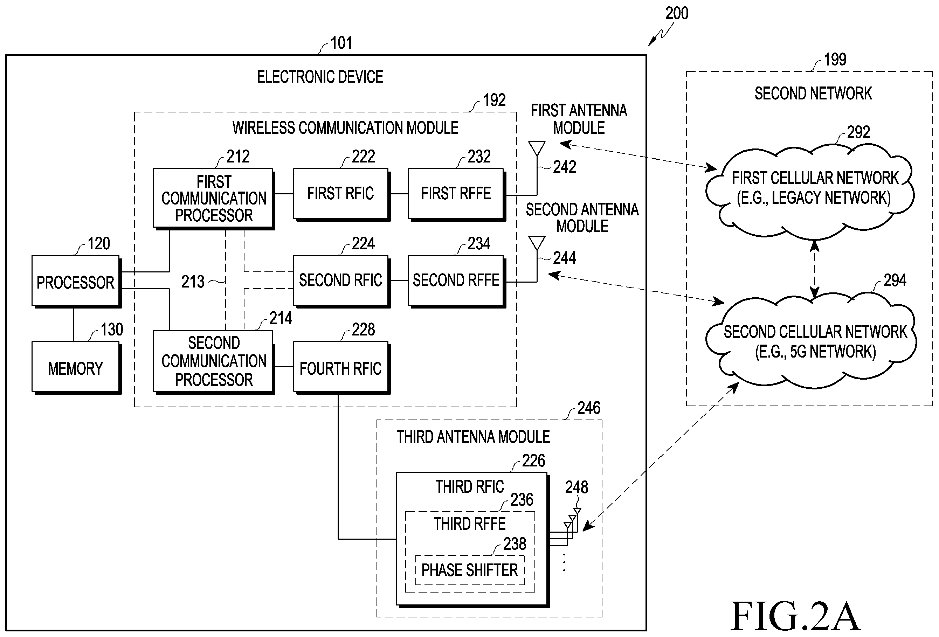

FIG. 2A is a block diagram 200 illustrating an electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

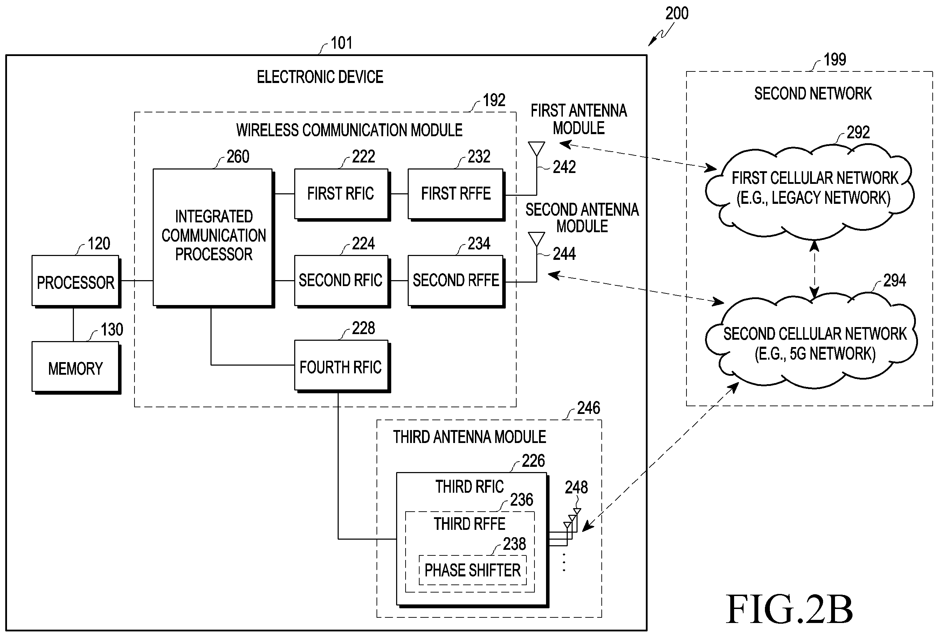

According to an embodiment, the first CP 212 and the second CP 214 may be implemented in a single chip or a single package. According to an embodiment, the first communication processor 212 or the second communication processor 214, along with the processor 120, an assistance processor 123, or communication module 190, may be formed in a single chip or single package. For example, as shown in FIG. 2B, a communication processor 440 may support all of the functions for communication with the first cellular network 292 and the second cellular network 294.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second CP 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

Meanwhile, a communication processor (e.g., at least one of the first communication processor 212, the second communication processor 214, or the integrated communication processor 260) may be implemented as an integrated circuit and, in this case, may also include at least one storage circuit for storing at least one instruction to trigger to perform an operation according to various embodiments and at least one processing circuit to execute at least one instruction.

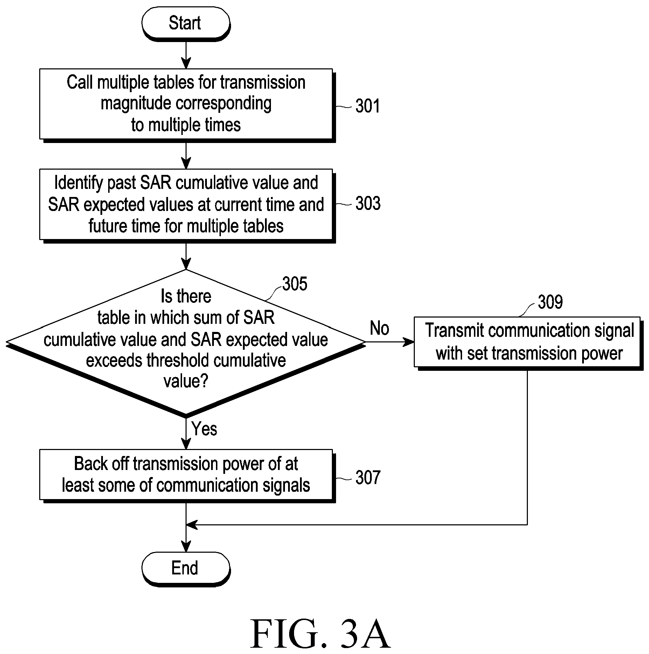

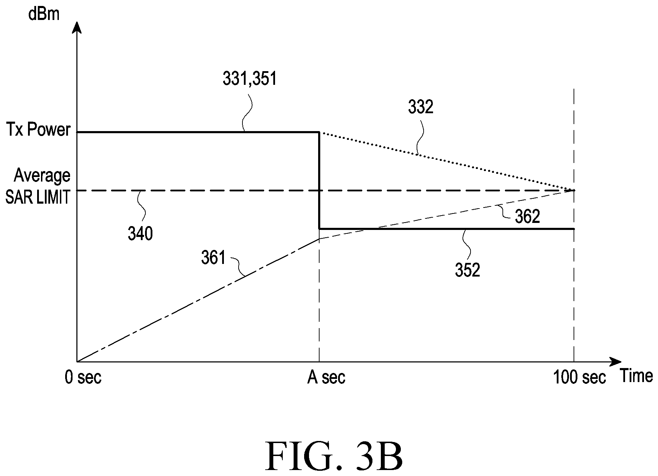

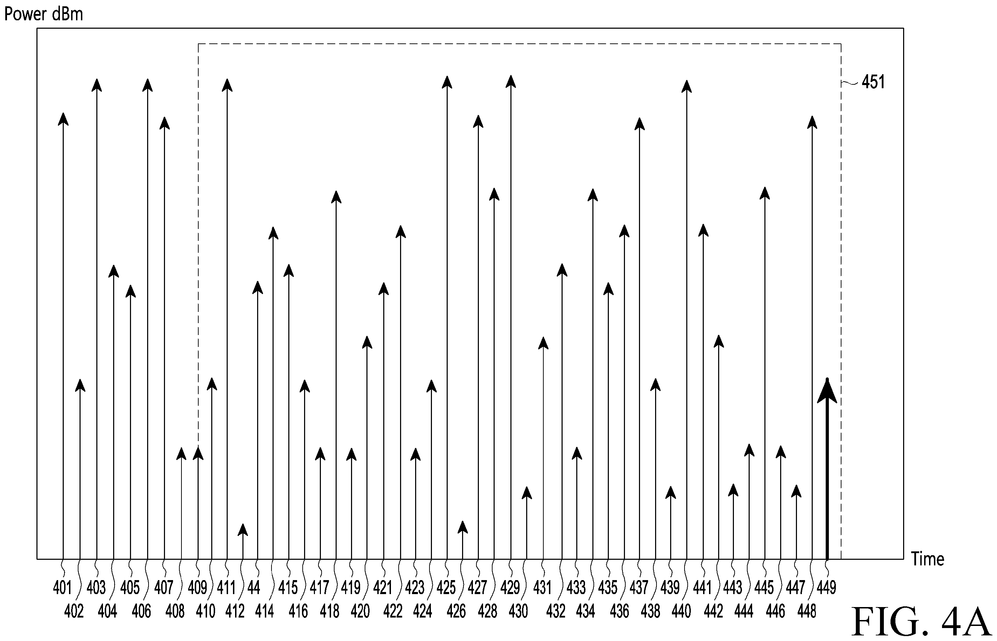

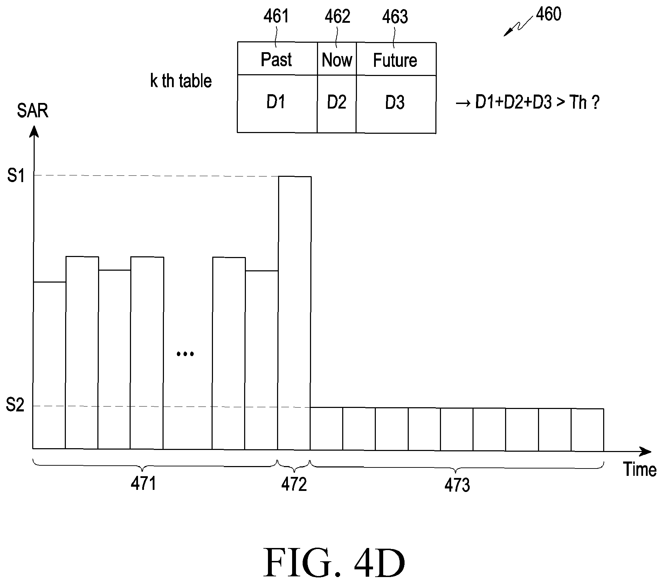

FIG. 3A is a flowchart illustrating an operation method of an electronic device according to various embodiments. The embodiment of FIG. 3A is described with reference to FIGS. 3B and 4A to 4E. FIG. 3B is a view illustrating transmission power and SAR over time according to various embodiments. FIGS. 4A to 4C illustrate graphs of transmission power per time according to various embodiments. FIGS. 4D to 4E illustrate tables of transmission power per time according to various embodiments.

According to various embodiments, an electronic device 101 (e.g., at least one of the processor 120, the first communication processor 212, the second communication processor 214, or the integrated communication processor 260) may invoke a plurality of tables for the transmission power corresponding to a plurality of times in operation 301. Before describing the embodiment associated with FIG. 3A, terms as shown in Table 1 are defined.

**[Table 1]**

| |
|---|
| a. Normal MAX Power: the maximum transmission power when SAR margin remains |
| b. Normal Max SAR: the magnitude of SAR generated in normal MAX power |
| c. Backoff MAX Power: the maximum transmission power when back-off is performed due to shortage of SAR margin |
| d. Backoff Max SAR: the magnitude of SAR generated when operating in backoff max power |
| e. Measurement Time(T): period for calculating the accumulated SAR or SAR average |
| f. Measurement Period(P): period (or time interval) for calculating SAR |
| g. Number of tables for calculating SAR: T/P - 1 |
| h. Average SAR LIMIT: the maximum value of the average SAR that should not be exceeded during T |
| i. Average Time(A_Time): the time measured with SARs accumulated |
| j. Accumulated SAR : the sum of SARs accumulated for average time. |
| k. Max accumulated SAR : Average SAR LIMIT X measurement Time |
| l. Average SAR : the magnitude of average SAR used for average Time |
| m. Tx Room : Max accumulated SAR - accumulated SAR, SAR remaining after use |
| n. Remain Time(R_Time) : total measurement time - time (A_Time) during which SAR is measured up to now |

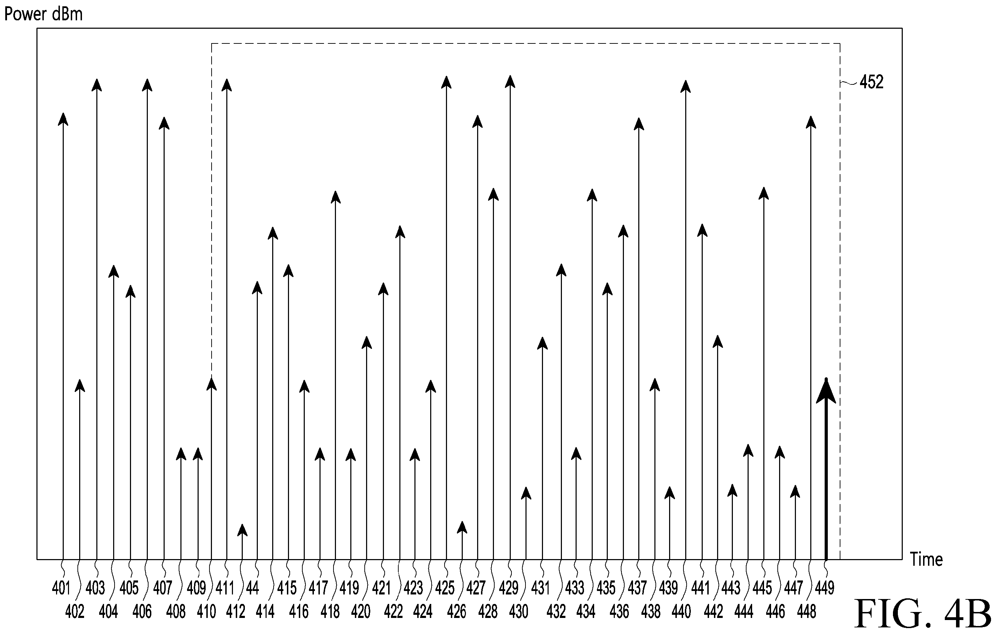

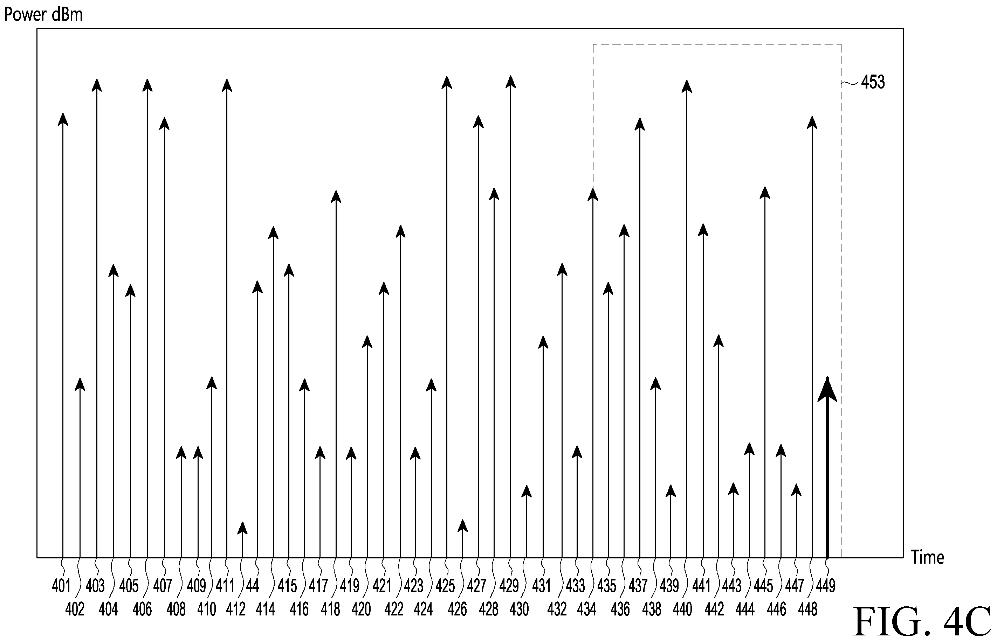

First, the table is described with reference to FIGS. 4A to 4C. Referring to FIG. 4A, a graph including transmission power for a plurality of times 401 to 449 is illustrated. The accumulated SAR (the accumulated SAR of Table 1) for a measurement time (the measurement time of Table 1), e.g., a measurement time including 50 time points, may be required to maintain a value below the maximum accumulated SAR (the max accumulated SAR of Table 1). The electronic device 101 may determine the transmission power of a communication signal to be transmitted at the current time point 449 to allow the accumulated SAR of nine future time points (e.g., the remain time of Table 1) in addition to the accumulated SAR at the current time point 449 and any past time points 409 to 448 (e.g., the average time of Table 1) to maintain below the maximum accumulated SAR. Further, as shown in FIG. 4B, the electronic device 101 may identify the transmission powers 452 which are one time point shifted from the transmission powers 451 at the current time point 449 and any past time points 409 to 448. Shifting by one time point may mean not reflecting data at the oldest time point (e.g., time point 409 in FIG. 4A). The number of transmission powers 452 at the current time point 449 and any past time points 410 to 448 is 40 and may be one less than the number, 41, of the transmission powers 451 of FIG. 4A. The electronic device 101 may determine the transmission power at the current time point 449 to allow the sum of the SAR by the transmission powers 452 and the SAR predicted at additional future 10 time points to maintain the maximum accumulated SAR or less. As shown in FIG. 4C, the electronic device 101 may identify the transmission powers 453 at the current time point 449 and any past time points 434 to 448 which are 25 time point shifted from the transmission powers 451. The number of transmission powers 453 is 16 and may be 25 less than the number, 41, of the transmission powers 451 of FIG. 4A. The electronic device 101 may determine the transmission power at the current time point 449 to allow the sum of the SAR by the transmission powers 453 and the SAR predicted at additional future 34 time points to maintain the maximum accumulated SAR or less. Although not shown, the electronic device 101 may manage a plurality of graphs each of which is one time point shifted. The period of calculating the SAR is the measurement period P of Table 1 and may be, e.g., the interval between the transmission powers in FIGS. 4A to 4C. The electronic device 101 may calculate and/or manage T/P-1 tables for a specific time point.

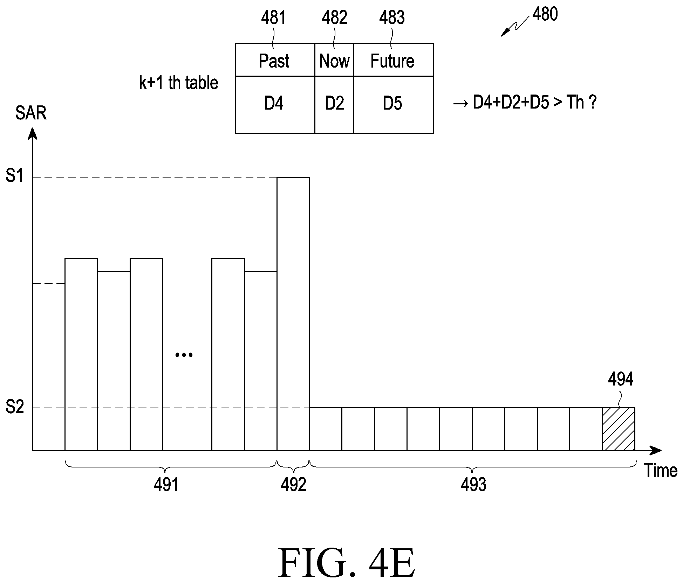

Hereinafter, a configuration of identifying an expected SAR value is described with reference to FIGS. 4D and 4E.

Referring to FIG. 4D, the electronic device 101 may identify the kth SAR table 460. The kth SAR table 460 may include D1, which is the accumulated SAR value 461 at at least one past time point, the maximum SAR value (D2) 462 at the current time, and the expected SAR value (D3) 463 at at least one future time point. Referring to the graph, the accumulated SAR value corresponding to at least one past time point 461 may be D1. D1, which is the accumulated SAR value 461 at at least one past time point may be identified based on the antenna configuration. The number of at least one past time point may be a number that is one less than the total number (e.g., 100) of time points corresponding to the measurement time (e.g., 50 seconds) in the first table. N, which is the total number (e.g., 100) of time points may be a result of dividing the measurement time by the sampling period (or shift period). Accordingly, in the kth table, the number of at least one past time point may be k less than the total number of time points. The electronic device 101 may identify D1 which is the accumulated SAR value of the N-k past time points 471. The electronic device 101 may use the maximum SAR value S1 for the current time point 472. The maximum SAR value S1 (e.g., the normal max SAR in Table 1) may be the SAR value corresponding to a designated maximum transmission power (e.g., the normal max power of Table 1) in the electronic device 101. In another embodiment, for the current time point 472, the SAR value immediately before the current time point 472 may be used. In another embodiment, for the current time point 472, the average SAR value for the past time points 471 of the current time point 472 may be used. The electronic device 101 may calculate the sum of SAR values S2 (e.g., the backoff max SAR of Table 1) for the transmission power (e.g., the backoff max power of Table 1) backed off, for at least one future time point 473. The electronic device 101 may identify D3 as the accumulated SAR for at least one future time point 473. In the kth table, the number of at least one future time point may be k-1. Accordingly, the electronic device 101 may identify whether the total SAR sum D1+D2+D3 for N time points including N-k past time points, one current time point, and k-1 future time points exceeds the maximum accumulated SAR, for the kth table. Upon identifying the excess, the electronic device 101 may back off the transmission power of the current time point. Referring to FIG. 4E, the electronic device 101 may identify the k+1th table 480 as shown in FIG. 4E. For the k+1th table 480, the electronic device 101 may identify D4, which is the accumulated SAR value 481 of at least one past time point, D2, which is the maximum SAR value 482 of the current time point, and D5, which is the expected SAR value 483 of at least one future time point. The electronic device 101 may identify whether the accumulated SAR value of D4+D2+D5 exceeds the maximum accumulated SAR. The number of at least one past time point 491 in the k+1th table may be one less than the number of at least one past time point 471 in the kth table. The number of at least one future time point 493 in the k+1th table may be one (494) larger than the number of at least one future time point 473 in the kth table.

According to various embodiments, in operation 303, the electronic device 101 may identify the past accumulated SAR value and the expected SAR value at the current time point and future time point for a plurality of tables corresponding to at least one future time point. The electronic device 101 may identify the accumulated SAR value for a first table and a total of N-1 tables, which are shifted by i time points (where i is 1 or more and less than N-2) from the first table. In operation 305, the electronic device 101 may identify whether there is a table in which the sum of the accumulated SAR value and the expected SAR value exceeds a threshold. If there is a table exceeding the threshold (yes in 305), the electronic device 101 may back off any one (or the maximum transmission power limit (MTPL)) of at least some transmission powers of the communication signals in operation 307. It will be appreciated by one of ordinary skill in the art that the back-off of transmission power may be replaced with back-off of maximum transmission power limit in the disclosure. If there is no table exceeding the threshold (no in 305), the electronic device 101 may transmit a communication signal in the set transmission power in operation 309. The back-off of the maximum transmission power value may mean back-off of the maximum transmission power value in various embodiments of the disclosure.

As described above, the electronic device 101 may determine the maximum transmission power value so that the average SAR magnitude used during the measurement time does not exceed the average SAR limit. Or, the electronic device 101 may determine the maximum transmission power value so that the accumulated SAR during the measurement time does not exceed the max accumulated SAR. The electronic device 101 may determine the maximum value of the maximum power for the next time period every time P. Conditions for operating in normal max power during next time P may be as follows.

Condition: Tx Room > SAR generated when operating in normal max power during next P (normal max SAR of Table 1) + SAR (backoff max SAR of Table 1) generated when operating in backoff max power during (Remain Time - P) = P X normal max SAR + (Remain Time - P) X backoff max SAR

In the condition, Tx Room may be the max accumulated SAR minus the SAR accumulated up to now. In the condition, (Remain Time - P) may be T - average time - P, e.g., the future time point described in connection with FIGS. 4A to 4E. P may mean the current time point. Average time may mean the past time point. Meeting the condition may mean that although the electronic device 101 sets the maximum transmission power of the normal max power during time P, there is no table in which the accumulated SAR exceeds the max accumulated SAR. Not meeting the condition may mean that there is a chance of presence of a table in which the accumulated SAR exceeds the max accumulated SAR if the electronic device 101 sets the maximum transmission power of the normal max power during time P, in which case the electronic device 101 may set the backoff max power as the maximum transmission power during time P.

Table 2 shows examples of variables and conditions.

**[Table 2]**

| |
|---|
| [Example of variable settings] |
| i. Normal MAX Power : 23dBm |
| ii. Backoff MAX Power : 20dBm |
| iii. Measurement Time(T) : 100 seconds |
| iv. Measurement Period(P) : 0.5 seconds |
| v. Number of SAR Calculator tables : 199 |
| vi. Average SAR LIMIT : 1.5mW/g |
| vii. Max accumulated SAR : 150mW/g |
| viii. When Normal Max SAR => 23dBm, SAR : 2mW/g |
| ix. When Backoff Max SAR => 20dBm, SAR : 1mW/g |
| [time point when the maximum power switches from normal max power to backoff max power]Average time X normal max power + (100 - average time) X backoff max power <= time point when accumulated max SAR is met |
| = Average time X 2 mW/g + (100 - average time) X 1mW/g <= 150 mW/g |
| <=> Average time <=50 |

In the example of Table 2, it is described that continuous use of the normal max power in the maximum transmission power for 50 seconds is possible and, after 50 seconds, back-off to the backoff max power is required. For example, it is hypothesized to transmit an RF signal in 23dBm which is the normal max power, for 50 seconds, transmit an RF signal in 23dBm which is the normal max power for the next P (0.5 seconds), and transmit an RF signal in 20dBm which is the backoff max power for 49.5 seconds which is (remain time - P). In this case, Tx Room may be 150mW/g - 50 X 2 mW/g, i.e., 50mW/g. The SAR generated for time P may be 2mW/g X 0.5 seconds, i.e., 1mW/g. The SAR generated during (remain time - P) may be 49.5 seconds X 1mW/g, i.e., 49.5 mW/g. In this case, it may be identified that the accumulated SAR during P and (remain time - P) is 50.5 mW/g which exceeds the Tx room, and thus, it is required to back off the maximum value of the transmission power at time P. The above-described example is described with reference to FIG. 3B which describes the transmission power associated with one RAT. For example, referring to FIG. 3B, up to A seconds (e.g., 50 seconds), the maximum transmission power may be set to the normal max power 351 but, after A seconds, it may be identified to be backed off to the backoff max power 352. The slope of the second portion 362 of the accumulated SAR may be formed to be less than the slope of the first portion 361 of the accumulated SAR according to the backoff of the maximum value of the maximum transmission power. Although the average SAR 331 before A seconds exceeds the average SAR limit 340, it may be identified that the average SAR 332 is the same as the value of the average SAR limit 340 at a time point of 100 seconds according to the backoff. Meanwhile, as is described below, such an occasion where the electronic device 101 transmits RF signals for two or more RATs may occur. For example, the electronic device 101 may transmit a first RF signal based on E-UTRA and a second RF signal based on NR according to EN-DC. In this case, the electronic device 101 may back off the maximum value of the transmission power of the RF signal so that the accumulated SAR does not exceed the accumulated max SAR. The electronic device 101 may set the priority of the RAT to be backed off. For example, the electronic device 101 may be configured to preferentially back off the transmission power of the RF signal based on NR, which is the RAT corresponding to the SCG, rather than E-UTRA, which is the RAT corresponding to the MCG. Meanwhile, EN-DC is exemplary, and if it is NE-DC, the electronic device 101 may be configured to preferentially back off the maximum value of the transmission power of the RF signal based on the E-UTRA. In DC, it is also exemplary to preferentially back off the maximum value of the transmission power of the RF signal based on the SCG, and the priority of the backoff is not limited.

Meanwhile, the wireless communication system may be divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The TDD-based channel response is substantially reciprocal. This means that in a given frequency domain, the downlink channel response and the uplink channel response are almost the same. Therefore, in a wireless communication system based on TDD, the downlink channel response may advantageously be obtained from the uplink channel response. In the TDD scheme, the entire frequency band is time-divided into uplink transmission and downlink transmission, so that downlink transmission by the base station and uplink transmission by the UE may not be performed simultaneously. In a TDD system in which uplink transmission and downlink transmission are divided into subframe units, uplink transmission and downlink transmission are performed in different subframes.

S.LSI TAS (Time Average SAR, hereinafter TAS) operation is essential for introducing 5G mmWave technology of wireless portable terminals and mitigating SAR problems, and operators in each country are demanding national standard approval and changes to NR TDD Tx duty in actual networks.

For example, the electronic device 101 operates based on the TAS and needs to limit the maximum transmission power in specific events required. For example, in the operation of the electronic device 101, there is a peak mode that limits the maximum transmission power to meet the time average SAR in a specific event. For example, when the electronic device 101 limits the maximum transmission power (or in peak mode) at a specific event, it is intended to mitigate noise and error occurrence in performing operations while considering TAS in the TDD band when the electronic device 101 performs a specific power-sensitive operation.

In a comparative embodiment, the electronic device 101 may apply a maximum instantaneous power value corresponding to the event so that an error (e.g., an event such as camera noise) does not occur for a specific operation considering the TAS. In a comparative embodiment, the electronic device 101 may calculate the maximum transmission power value corresponding to a factor of Tx duty considering TAS in the TDD band. Further, the electronic device 101 may set a maximum instantaneous power value for the event based on a case where Tx duty is 100%. However, if the Tx duty is less than 100% depending on the network circumstance, even if the transmission power is limited to the maximum transmission power value and peak mode, higher power than the maximum instantaneous power value performing a specific operation may be transmitted. In this case, an error may occur while performing a specific operation. For example, Mipi errors of the front camera, such as poor image quality, line generation and freezing, may occur in the front camera. The error may occur when the N78 SRS switching power value is transmitted or when the signal is output in the SUB 6 ANT PRX2 path, which may be caused as the N78 PRX2 ANT and the front camera approach. In other words, it is necessary to consider not only the limitation of the maximum transmission power value considering TAS between adjacent parts, but also the maximum instantaneous power value required to perform operations for each component.

In an embodiment of the disclosure, in the electronic device 101, for a UE supporting the Tx operation using a TDD band and/or SRS Tx (hereinafter, collectively referred to as a TDD band), when operations such as camera execution and Tx communication of an NR TDD band are simultaneously operated, the maximum transmission power value is varied according to the Tx duty, so that the corresponding functions may not be executed due to noise upon a specific operation. For example, the electronic device 101 needs to set a maximum instantaneous power value (hereinafter referred to as Pmaxinst) less than the maximum transmission power value (Plimit) to limit the transmission power of the signal to the set power value or less.

Referring to Table 3, it is illustrated to reduce the maximum transmission power value (Plimit) from about 18dBm to 15dBm and apply it for a power backoff of 3dB due to noise in the N41 TDD band when the camera is operated in the electronic device 101.

**[Table 3]**

| **Tech_Band** | **DSI: Antenna** | **Maximum transmission power value [Plimit](dBm) for the corresponding operation in the UE in the free state before performing the operation** | **Maximum transmission power value [Plimit] (dBm) for the corresponding operation when performing operation (camera on)** |
|---|---|---|---|
| N41 | 0 | 18 (duty 100% based) | 15 (duty 100% based) |

Referring to Table 4, in the electronic device 101, generally in the case of a TDD band, the maximum transmission power value may be calculated based on 100% Tx duty, and if the Tx duty is decreased, the calculated maximum transmission power value may be increased.

**[Table 4]**

| | Target | | Duty | | Power Setup |
|---|---|---|---|---|---|
| Plimit power applied | 18 | | 100% | | 18 |
| | | | 50% | | 21.0 |
| | | | 25% | | 24.0 |

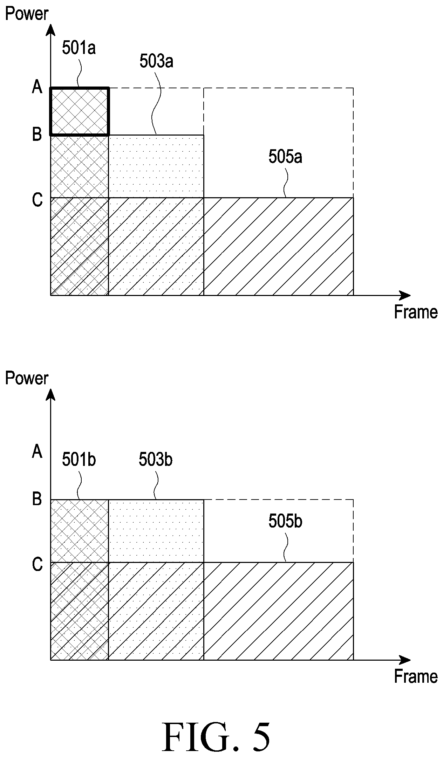

Referring to Table 4, the maximum instantaneous power value to be output when the camera is operated in the electronic device 101 may be targeted as about 18dBm, and at 100% Tx duty, the maximum transmission power value may be set as about 18dBm. For example, when the Tx duty of the TDD band is set to about 25% in the electronic device 101, a backoff of about 3dB may be applied as the maximum instantaneous power value is about 21dBm when the camera is operated at the maximum transmission power value of about 24dBm. In this case, when Tx duty is changed to about 12.5% in the electronic device 101, even if the backoff is applied, it may be varied back to the maximum instantaneous power of about 24dBm. In this case, since it is higher than the maximum instantaneous power value targeted during the camera operation, 18 dBm, noise may be generated. According to an embodiment of the disclosure, the electronic device 101 may constantly limit the maximum instantaneous power to be transmitted even in an environment in which the Tx duty is reduced so that the maximum instantaneous power is limited to 18 dBm even when the factor of the Tx duty is changed. FIG. 5 illustrates comparing peak mode operations in an operation of an electronic device according to an embodiment of the disclosure.

According to a comparative embodiment, in the electronic device 101 implementing the peak mode, the maximum transmission power value may be adjusted according to Tx duty set for each frame in the TDD band. For example, referring to 501a of FIG. 5, when Tx duty is set to 20%, about AdBm may be calculated as the maximum transmission power. Referring to 503a and 505a of FIG. 5, when Tx duty is set to 50% and 100%, respectively, the maximum transmission power may be calculated as BdBm and CdBm. In other words, as the Tx duty approaches 100%, the maximum transmission power considering the TAS in the TDD band may decrease. Conversely, as the factor of the Tx duty decreases, the maximum transmission power may increase. Thus, in a frame with a Tx duty of 20% in 501a of FIG. 5, AdBm may be transmitted as the maximum transmission power, but in this case, when the electronic device 101 performs a camera operation, an error may occur due to the use of a power value higher than the maximum power value for the corresponding operation.

According to an embodiment of the disclosure, in the electronic device 101 implementing the peak mode, a maximum transmission power value Plimit considering the TAS and a maximum instantaneous power value Pmaxinst corresponding to an event may be set in the TDD band. For example, the event may mean an error caused by power transmitted above a threshold value when the camera is driven. For example, the electronic device 101 may set the maximum instantaneous power value corresponding to the event to BBm. For example, referring to 505b of FIG. 5, when Tx duty is set to 100%, the maximum transmission power value of the electronic device 101 may be calculated as CdBm, and CdBm may be a value less than BdBm, which is the maximum instantaneous power value corresponding to the event. In this case, when Tx duty is 100%, the electronic device 101 may transmit a signal using CDBm less than B as the maximum transmission power value of the peak mode of the disclosure. Referring to 503b of FIG. 5, when Tx duty is set to 50%, the electronic device 101 may transmit a signal using BdBm as the maximum transmission power value of the peak mode of the disclosure because the maximum instantaneous power value corresponding to the event is the same as the maximum transmission power value calculated considering the TAS. Referring to 501b of FIG. 5, when Tx duty is set to 20%, the maximum transmission power value (AdBm) calculated considering the TAS may be larger than the maximum instantaneous power value (BdBm) corresponding to the event. In this case, the electronic device 101 of the disclosure may transmit a signal using the maximum instantaneous power value (BdBm) corresponding to the event as the maximum transmission power value of the peak mode of the disclosure. Therefore, the electronic device 101 proposed in the disclosure may reduce the occurrence of an error event by implementing a peak mode considering a change in TDD duty. According to an embodiment of the disclosure, the electronic device 101 may perform an operation in the peak mode of the disclosure when noise is generated according to maximum instantaneous power transmission in a specific event based on the TAS.

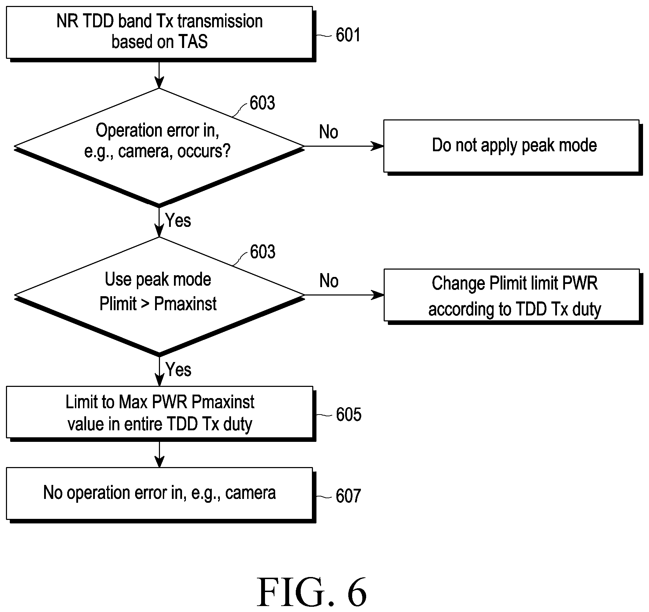

FIG. 6 illustrates operations of an electronic device according to an embodiment of the disclosure.

In 601 of FIG. 6, the electronic device 101 of the disclosure may perform a Tx transmission operation using an NR TDD band based on the TAS.

In 603 of FIG. 6, the electronic device 101 of the disclosure may identify whether an error has occurred when performing a camera operation. For example, in 602 (603-No) of FIG. 6, if the electronic device 101 does not have a problem in performing a camera operation, the peak mode may not be applied.

In 605 (603-Yes) of FIG. 6, the electronic device 10 of the disclosure may compare the Plimit with the Pmaxinst value in using the peak mode and limit the power value to the Plimit value according to TDD Tx duty (604) if Plimit is less (605-No) and limit the power value to Pmaxinst in the entire Tx duty of the TDD band when Plimit is larger (605-Yes) (606).

For example, the electronic device 101 may further set a maximum instantaneous power value Pmaxinst corresponding to an event in addition to the maximum transmission power value Plimit calculated for Tx transmission of a TDD band during peak mode operation by design. For example, the electronic device 101 may set the maximum instantaneous power value Pmaxinst corresponding to the event to be lower than the maximum transmission power value Plimit considering the TAS in the TDD band in the event of a specific operation. For example, in the electronic device 101 of the disclosure, when the Plimit value is larger than the Pmaxinst value, the maximum transmission power value may be clipped to Pmaxinst. The electronic device 101 of the disclosure may limit the maximum transmission power value from the total available Tx duty to the Pmaxinst value rather than conversion of the maximum instantaneous power value according to a specific Tx Duty.

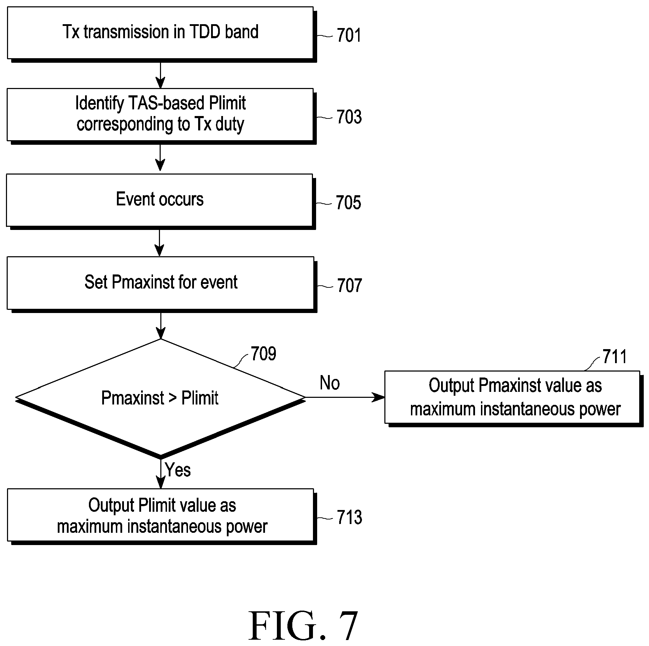

FIG. 7 illustrates operations of an electronic device according to an embodiment of the disclosure.

According to an embodiment of the disclosure, in 701, the electronic device 101 may perform a Tx transmission operation in a TDD band. In this case, in 703, the electronic device 101 may identify TAS-based Plimit corresponding to Tx duty. For example, in 705, if a specific event occurs in the electronic device 101, in 707, a Pmaxinst value corresponding to the event may be set or a set Pmaxinst value may be identified.

According to an embodiment of the disclosure, in 709, the electronic device 101 may identify whether the Plimit is less than the Pmaxinst, and output the Plimit value as the maximum instantaneous power when the Plimit value is less (709-Yes) (713) and, when the Pmaxinst value is less (709-No), output the Pmaxinst value as the maximum instantaneous power

(711).

A TAS-based operation applied to a TAS-based electronic device using a TDD band according to an embodiment of the disclosure is shown in Table 5.

**[Table 5]**

| |
|---|
| Plimit per duty = Plimit + 10*log₁₀(100/duty) |
| when event is executed |
| Pmaxinst = Min(normal_Pmaxinst, event_Pmaxinst) |
| If Pmaxinst > Plimit |
| Plimit = Plimit, |
| If Pmaxinst < Plimit |
| Plimit = Pmaxinst |

Referring to Table 5, the electronic device 101 may generate an event_Pmaxinst value, compare the event Plimit value and the event Pmaxinst in the corresponding event circumstance, and operate with a limit of the maximum power value according to the duty to the TAS-based power value in a Tx duty circumstance where event Pmaxinst > Plimit and, in a Tx duty circumstance where event Pmaxinst < Plimit, limit the maximum instantaneous power to Pmaxinst, thereby clipping the maximum instantaneous power organically in an event circumstance in a situation where the Tx duty is varied in the network. More specifically, referring to Table 6 below, an example of maximum instantaneous power which is limited for each specific event considering TAS is illustrated.

**[Table 6]**

| index | AP Event | CP Event | LET Band | NR Band | LET Plimit | NR Plimit | LTE PmaxInst | NR PmaxInst | Commnet |
|---|---|---|---|---|---|---|---|---|---|
| 1 | 0x8001 | 20 | 3 | 41 | 230 | 180 | 240 | 175 | For NR, Plimit > Pmaxinst |
| 2 | 0x8001 | 20 | 1 | 41 | 230 | 180 | 240 | 200 | For NR, Plimit < Pmaxinst |

As an example, according to event 1 in Table 6, in NR band 41, NR Primit may be calculated as 180, and NR Pmaxinst may be set to 175. In this case, since Plimit>Pmaxinst is established in the NR band, the Pmaxinst value may be limited to the maximum instantaneous power value. Further, according to event 2, since the NR Pmaxinst value is larger than the NR Plimit, in this case, the Plimit value may be limited to the maximum instantaneous power value to meet the SAR criteria.

According to an embodiment of the disclosure, in an electronic device based on a TAS operation, the maximum instantaneous power value may be limited in order to prevent error and noise regardless of a specific Tx duty. The electronic device 101 according to an embodiment of the disclosure may limit the maximum instantaneous power when duty is varied even in LTE/NR Main Tx and NR TDD SRS Tx. For example, since SRS Tx is transmitted in a very short time, Tx duty itself is very short. However, in the electronic device 101 according to an embodiment of the disclosure, the power limit in an event circumstance is performed through Pmaxinst which is an element independent of Tx duty according to the above-mentioned operation, so that the maximum instantaneous power may be limited independently of duty even in each of four SRS paths as well as the Main Tx path. Further, the electronic device 101 according to an embodiment of the disclosure may operate in a more enhanced environment in a noise environment of a wireless terminal requiring various new technologies and new networks.

An electronic device 101 according to an embodiment of the disclosure may comprise a transceiver and at least one processor. The at least one processor according to an embodiment of the disclosure may be configured to transmit a signal according to a Tx duty set based on a time division duplex (TDD) band.

The at least one processor according to an embodiment of the disclosure may be configured to calculate a maximum power value output when transmitting the signal based on a maximum transmission power value considering a time average SAR.

The at least one processor according to an embodiment of the disclosure may be configured to identify an occurrence of an event in the electronic device.

The at least one processor according to an embodiment of the disclosure may be configured to set a maximum instantaneous power value corresponding to the event.

The at least one processor according to an embodiment of the disclosure may be configured to compare the calculated maximum transmission power value and the set maximum instantaneous power value to use a less power value as the maximum power value capable of outputting at the Tx duty.

The at least one processor according to an embodiment of the disclosure may be configured to, to block the occurrence of the event, for a maximum power value used for the signal transmission, use the set maximum instantaneous power value as the maximum power value of the signal transmission when the set maximum instantaneous power value is less than the calculated maximum transmission power value, and use the calculated maximum transmission power value as the maximum power value of the signal transmission when the set maximum instantaneous power value is larger than or equal to the calculated maximum transmission power value.

The at least one processor according to an embodiment of the disclosure may be further configured to clip the calculated maximum transmission power value to the set maximum instantaneous power value when the set maximum instantaneous power value is less than the calculated maximum transmission power value.

In the electronic device 101 according to an embodiment of the disclosure, the calculated maximum transmission power value may be calculated as Plimit + 10*log₁₀(100/duty), and Plimit may be a power value when the Tx duty is 100%, and the duty may be a Tx duty value when transmitting the signal.

In the electronic device 101 according to an embodiment of the disclosure, the event may occur when the calculated maximum transmission power value exceeds a power value appropriate for the electronic device to perform a specific operation.

In the electronic device 101 according to an embodiment of the disclosure, the at least one processor may be configured to compare the set maximum instantaneous power value and the maximum transmission power value calculated according a value related to the Tx duty is changed.

In the electronic device 101 according to an embodiment of the disclosure, the signal may be a signal transmitted when a camera is executed simultaneously in the electronic device supporting TDD communication.

In the electronic device 101 according to an embodiment of the disclosure, the signal may be a signal transmitted from a UE supporting an SRS Tx.

In the electronic device 101 according to an embodiment of the disclosure, the at least one processor may be further configured to identify a value for the Tx duty.

A method by an electronic device 101 according to an embodiment of the disclosure may comprise transmitting a signal according to a Tx duty set based on a time division duplex (TDD) band.

The method by the electronic device 101 according to an embodiment of the disclosure may comprise calculating a maximum power value output when transmitting the signal based on a maximum transmission power value considering a time average SAR.

The method by the electronic device 101 according to an embodiment of the disclosure may comprise identifying an occurrence of an event in the electronic device.

The method by the electronic device 101 according to an embodiment of the disclosure may comprise setting a maximum instantaneous power value corresponding to the event.

The method by the electronic device 101 according to an embodiment of the disclosure may comprise comparing the calculated maximum transmission power value and the set maximum instantaneous power value.

In the method by the electronic device 101 according to an embodiment of the disclosure, a less power value of the calculated maximum transmission power value and the set maximum instantaneous power value may be used as a maximum power value capable of outputting at the Tx duty.

In the method by the electronic device 101 according to an embodiment of the disclosure, to block the occurrence of the event, for a maximum power value used for the signal transmission, the set maximum instantaneous power value may be used as the maximum power value of the signal transmission when the set maximum instantaneous power value is less than the calculated maximum transmission power value, and the calculated maximum transmission power value may be used as the maximum power value of the signal transmission when the set maximum instantaneous power value is larger than or equal to the calculated maximum transmission power value.

The method by the electronic device 101 according to an embodiment of the disclosure may further comprise clipping the calculated maximum transmission power value to the set maximum instantaneous power value when the set maximum instantaneous power value is less than the calculated maximum transmission power value.

In the method by the electronic device 101 according to an embodiment of the disclosure, the calculated maximum transmission power value may be calculated as Plimit + 10*log₁₀(100/duty), and Plimit may be a power value when the Tx duty is 100%, and the duty may be a Tx duty value when transmitting the signal.

In the method by the electronic device 101 according to an embodiment of the disclosure, the event may occur when the calculated maximum transmission power value exceeds a power value appropriate for the electronic device to perform a specific operation.

The method by the electronic device 101 according to an embodiment of the disclosure may further comprise identifying that a value related to the Tx duty is changed.

The method by the electronic device 101 according to an embodiment of the disclosure may further comprise comparing the set maximum instantaneous power value and the maximum transmission power value calculated according to the changed Tx duty.

In the method by the electronic device 101 according to an embodiment of the disclosure, the signal may be transmitted when a camera is executed simultaneously in the electronic device supporting TDD communication.

In the method by the electronic device 101 according to an embodiment of the disclosure, the signal may be a signal transmitted from a UE supporting an SRS Tx.

The method by the electronic device 101 according to an embodiment of the disclosure may further comprise identifying a value for the Tx duty.

## Claims

1. An electronic device, comprising:
a transceiver; and
at least one processor, wherein the at least one processor is configured to:
transmit a signal according to a Tx duty which is set based on a time division duplex (TDD) band,
calculate a maximum power value which is output when transmitting the signal based on a maximum transmission power value considering a time average SAR,
identify an occurrence of an event in the electronic device,
set a maximum instantaneous power value corresponding to the event, and
compare the calculated maximum transmission power value and the set maximum instantaneous power value to use a less power value as a maximum power value capable of outputting at the Tx duty.

2. The electronic device of claim 1, wherein the at least one processor is configured to, to block the occurrence of the event, for a maximum power value used for the signal transmission:
use the set maximum instantaneous power value as the maximum power value of the signal transmission when the set maximum instantaneous power value is less than the calculated maximum transmission power value; and
use the calculated maximum transmission power value as the maximum power value of the signal transmission when the set maximum instantaneous power value is larger than or equal to the calculated maximum transmission power value.

3. The electronic device of claim 1 or 2, wherein the at least one processor is further configured to:
clip the calculated maximum transmission power value to the set maximum instantaneous power value when the set maximum instantaneous power value is less than the calculated maximum transmission power value.

4. The electronic device of any one of claims 1 to 3, wherein the calculated maximum transmission power value is calculated as Plimit + 10*log₁₀(100/duty), and wherein Plimit is a power value when the Tx duty is 100%, and the duty is a Tx duty value when transmitting the signal.

5. The electronic device of any one of claims 1 to 4, wherein the event occurs when the calculated maximum transmission power value exceeds a power value appropriate for the electronic device to perform a specific operation.

6. The electronic device of any one of claims 1 to 5, wherein the at least one processor is configured to:
compare the set maximum instantaneous power value and the maximum transmission power value calculated according to a value related to the Tx duty being changed.

7. The electronic device of any one of claims 1 to 6, wherein the signal is a signal transmitted when a camera is executed simultaneously in the electronic device supporting TDD communication.

8. The electronic device of any one of claims 1 to 7, wherein the signal is a signal transmitted from a terminal supporting an SRS Tx.

9. The electronic device of any one of claims 1 to 8, wherein the at least one processor is further configured to:
identify a value for the Tx duty.

10. A method by an electronic device, the method comprising:
transmitting a signal according to a Tx duty set based on a time division duplex (TDD) band;
calculating a maximum power value which is output when transmitting the signal based on a maximum transmission power value considering a time average SAR;
identifying an occurrence of an event in the electronic device;
setting a maximum instantaneous power value corresponding to the event; and
comparing the calculated maximum transmission power value and the set maximum instantaneous power value,
wherein a less power value of the calculated maximum transmission power value and the set maximum instantaneous power value is used as a maximum power value capable of outputting at the Tx duty.

11. The method of claim 10, wherein for the maximum power value used for the signal transmission to block the occurrence of the event, the set maximum instantaneous power value is used as the maximum power value of the signal transmission when the set maximum instantaneous power value is less than the calculated maximum transmission power value, and the calculated maximum transmission power value is used as the maximum power value of the signal transmission when the set maximum instantaneous power value is larger than or equal to the calculated maximum transmission power value.

12. The method of claim 10 or 11, further comprising clipping the calculated maximum transmission power value to the set maximum instantaneous power value when the set maximum instantaneous power value is less than the calculated maximum transmission power value.

13. The method of any one of claims 10 to 12, wherein the calculated maximum transmission power value is calculated as Plimit + 10*log₁₀(100/duty), and wherein Plimit is a power value when the Tx duty is 100%, and the duty is a Tx duty value when transmitting the signal.

14. The method of any one of claims 10 to 13, wherein the event occurs when the calculated maximum transmission power value exceeds a power value appropriate for the electronic device to perform a specific operation.

15. The method of any one of claims 10 to 14, further comprising:
identifying that a value related to the Tx duty is changed; and
comparing the set maximum instantaneous power value and the maximum transmission power value calculated according to the changed Tx duty.
